# EUROPEAN PATENT SPECIFICATION

(11) **EP 4 491 257 B1**
(45) Date of publication and mention of the grant of the patent: **19.08.2026**
(21) Application number: 23185040.5
(22) Date of filing: 12.07.2023
(51) Int. Cl.: B01D 53/14

(54) **CARBON CAPTURE**
KOHLENSTOFFABSCHEIDUNG
CAPTURE DE CARBONE

(43) Date of publication of application: 15.01.2025
(73) Proprietor: Infineum International Limited, Abingdon Oxfordshire OX13 6BB (GB)
(72) Inventor: COULTAS, David, Abingdon, OX13 6BB (GB); HOLLINGSWORTH, Nathan, Abingdon, OX13 6BB (GB); GREER, Adam, Abingdon, OX13 6BB (GB); SCOTT, Robin, Abingdon, OX13 6BD (GB)
(74) Representative: Pedley, Michael Ewan

(56) References cited:
- WO-A1-00/17130
- US-A1- 2020 079 990
- US-A1- 2022 080 348
- RAMA SIDRA ET AL: "Encapsulation of 2-amino-2-methyl-1-propanol with tetraethyl orthosilicate for COcapture", FRONTIERS OF CHEMICAL SCIENCE AND ENGINEERING, HIGHER EDUCATION PRESS, HEIDELBERG, vol. 13, no. 4, 21 November 2019 (2019-11-21), pages 672 - 683, XP036965201, ISSN: 2095-0179, [retrieved on 20191121], DOI: 10.1007/S11705-019-1856-6
- NAJIB S. B. M. ET AL: "The Effect of MDEA/AMP and Span-80 in Water-in-Oil (W/O) Emulsion for Carbon Dioxide Absorption", vol. 26, no. 2, 25 July 2022 (2022-07-25), pages 17 - 27, XP093115168, ISSN: 2600-9226, Retrieved from the Internet <URL:https://amst.utm.my/index.php/amst/article/download/236/267> DOI: 10.11113/amst.v26n2.236
- PICHETWANIT PANATDA ET AL: "Effects of surfactant type and structure on properties of amines for carbon dioxide capture", COLLOIDS AND SURFACES A : PHYSIOCHEMICAL AND ENGINEERINGS ASPECTS, ELSEVIER, AMSTERDAM, NL, vol. 622, 20 April 2021 (2021-04-20), XP086581084, ISSN: 0927-7757, [retrieved on 20210420], DOI: 10.1016/J.COLSURFA.2021.126602

## Description

This invention relates to methods, compositions, systems and uses relating to the separation of acidic gases from a gaseous mixture. In particular, the invention relates to methods, compositions, systems and uses for the separation of sulphur dioxide, nitrogenous oxides (especially nitrogen dioxide) and carbon dioxide, and preferably carbon dioxide, from a gaseous mixture containing sulphur dioxide, nitrogenous oxides (especially nitrogen dioxide) and/or carbon dioxide, and preferably carbon dioxide, such as that formed during the combustion of fossil fuels.

### Background of the Invention

The removal of carbon dioxide (CO₂) and other acidic gases from gaseous mixtures is of increasing industrial importance. Carbon dioxide is the inevitable by-product of the combustion of fossil fuels such as gas, coal, and oil. It is also generated in many other industrial processes, for example during the manufacture of cement. The adverse effects caused by the release of CO₂ into the atmosphere have been identified for many years and governments and international organisations around the world have recognised the need to reduce CO₂ emissions to combat global warming. International agreements such as the 2016 Paris Agreement set goals aimed at significantly reducing CO₂ emissions from all sources and individual countries and industries have since adopted 'net-zero' targets whereby CO₂ emissions are to be removed or abated entirely. These are ambitious targets but there is a broad consensus that action must be taken to avoid the irreversible and catastrophic damage of climate change.

The Inter-governmental Panel on Climate Change (IPCC) estimates that more than three-quarters of global CO₂ emissions are attributable to the burning of fossil fuels for power (electricity) generation. The majority of the remainder can be attributed to industrial processes including cement manufacture, refinery operations, iron and steel manufacturing and the petrochemical industry. Methods able to remove or capture CO₂ from these sources, and from other processes where CO₂ is present or produced, would thus be of significant benefit to efforts to reduce atmospheric CO₂ and so ameliorate global warming. In processes in which CO₂ is present, for example in which CO₂ is emitted or produced, other acidic gases may also be present. Gases such as sulphur oxides, nitrogen oxides and hydrogen sulphide are also detrimental to the atmosphere and to public health and so a method for the removal or capture of these gases too would be of great benefit.

Techniques for the absorption of CO₂ using liquid absorbents are known in the art. Most commonly, liquid amine absorbents such as alkanolamines dissolved in water are used. CO₂-containing gas streams are contacted with the absorbent where the CO₂ reacts with the amine to produce carbamate, carbonate and bicarbonate species thereby trapping the CO₂ by chemical means. The ammonium salts that form are thermally unstable so in a secondary stage, it is possible to liberate the captured CO₂ by heating and thus regenerate the liquid amine absorbent. The process is thus cyclic allowing repeated use of the same liquid absorbent. Common amines used in aqueous solution include monoethanolamine (MEA), diethanolamine (DEA), methyldiethanolamine (MDEA) and triethanolamine (TEA), 2-Amino-2-methyl-1-propanol (AMP) and piperazine (PZ). The CO₂ liberated through the thermal decomposition of the species formed can be collected and either employed in other processes (termed "utilisation") or it may be removed from the atmosphere altogether, for example by pumping it into disused oilwells, mines or other underground structures (termed "storage"). The cyclic process thus enables the effective removal of CO₂ from CO₂-containing gas streams. This is often referred to as Carbon Capture and Storage (CCS) or Carbon Capture, Utilisation and Storage (CCUS).

Although effective, there are several drawbacks with the use of aqueous amine solutions as liquid absorbents for CCS/CCUS operations. The main drawback is the amount of energy needed. In part, due to the high volatility of water, the absorption of CO₂ proceeds at a relatively low temperature such as from ambient temperature up to about 50°C. This needs to be increased significantly such that the vapour-liquid equilibrium drives the CO₂-absorbed ammonium species to thermally decompose and so liberate CO₂ (for example, typically this may require raising the temperature to above 100°C, which in the case of aqueous solutions results in significant water vaporisation, even at elevated pressure, which consumes significant energy that is difficult to recover). The carbon capture process employs large volumes of the liquid absorbent and so the amount of energy needed to maintain the required temperature is also large, mainly owing to the relatively high specific heat capacity of water (4.2 kJ kg⁻¹ K⁻¹) and specific enthalpy of vaporisation (2260 kJ kg⁻¹ @ 100°C). The use of water also gives rise to corrosion problems which may require engineering mitigation, such as the selection of construction materials. It would thus be highly advantageous to be able to reduce the amount of energy required in a cyclic CCS/CCUS process.

US 9,713,788 attempts to mitigate the problems associated with the use of aqueous absorbent solutions by instead employing either a liquid amine alone or an amine dissolved in an aprotic solvent. Examples of amines used include some of those mentioned hereinabove as well as compounds such as 1,5-diamino-3-oxapentane (DAOP), aminopropionitrile (APN), 2-ethoxyethylamine (2EEA), 1,5-bis(methylamino)-3-oxapentane (BMAP), and polyethyleneimine (PEI); and examples of aprotic solvents used include dimethylsulphoxide (DMSO). However, such approaches require the selection of amines which can be dissolved in such aprotic solvents and may not be as effective as other options. The purported improvements may also be eroded through the environmental sustainability, handling considerations and cost of the aprotic solvents, which also need to be made available in large quantities. NAJIB S. B. M. ET AL: "The Effect of MDEA/AMP and Span-80 in Water-in-Oil (W/O) Emulsion for Carbon Dioxide Absorption",JOURNAL OF APPLIED MEMBRANE SCIENCE & TECHNOLOGY,vol. 26, no. 2 25 July 2022 (2022-07-25), pages 17-27, also relates to absorbents for acid gas separation.

Accordingly, there remains a need for acid gas separation and carbon capture methods that can overcome the above problems and in particular methods that offer improved alternatives to aqueous amine solutions.

### Summary of the Invention

Surprisingly, it has now been found that a separation composition comprising an amine dispersed in a nonaqueous solvent (an oleaginous fluid or base oil), stabilized with a surfactant, achieves a high degree of acidic gas separation, and avoids many of the main drawbacks of aqueous amine systems. Using a non-aqueous solvent of higher initial boiling point and lower specific heat capacity compared with water reduces volatile solvent losses especially during the higher temperature decomposition stage necessary for solvent regeneration, and thus reduces the energy input required of the whole process. The non-volatile solvent also allows for significantly higher temperature to be used for desorbing acidic gases separated utilising the methods, compositions, systems and uses of the present invention, thus further improving the overall efficiency of the process by mitigating irretrievable energy loss to evaporation. In addition, using a surfactant stabilised amine dispersion has surprisingly been found to reduce volatile losses of the amine itself, thus reducing the requirement for emissions aftertreatment and increasing the service life of the active amine in the solvent.

The present invention therefore provides methods for separating acidic gases, such as (and in particular) carbon dioxide (CO₂) from a gaseous mixture which uses considerably less energy than established methods employing aqueous absorbent solutions, enabling a more efficient cyclic CCS/CCUS procedure to be established, while also mitigating the other problems associated with existing non-aqueous solvents.

Accordingly, in a first aspect the present invention provides a method of separating acidic gases from a gaseous mixture containing such acidic gases, the method comprising contacting the gaseous mixture with a dispersion of at least one organic base and a base oil, the dispersion further comprising at least one surfactant, wherein the at least one surfactant comprises the reaction product or mixture of a poly(olefin) succinic acid and/or poly(olefin) succinic anhydride with an organic amine or alkanolamine, and wherein the organic base is present in an amount of at least 20% by weight of the dispersion.

In a second aspect, the present invention provides a composition for separating acidic gases from a gaseous mixture comprising such acidic gases, the composition comprising a dispersion of at least one labile organic base in a base oil, the dispersion further comprising at least one surfactant, wherein the at least one surfactant comprises the reaction product or mixture of a poly(olefin) succinic acid and/or poly(olefin) succinic anhydride with an organic amine or alkanolamine, and wherein the organic base is present in an amount of at least 20% by weight of the dispersion.

In a third aspect, the present invention provides an acidic gas separation system, being a system for separating acidic gases from a gaseous mixture comprising such acidic gases, the system comprising a vessel with means for fluid introduction and removal, wherein the vessel contains a composition according to the second aspect of the invention.

In a fourth aspect, the present invention provides uses of a composition comprising a dispersion of at least one organic base and a base oil, the composition further comprising at least one surfactant, wherein the at least one surfactant comprises the reaction product or mixture of a poly(olefin) succinic acid and/or poly(olefin) succinic anhydride with an organic amine or alkanolamine, and wherein the organic base is present in an amount of at least 20% by weight of the dispersion to separate acidic gases from a gaseous mixture containing such acidic gases and to capture carbon dioxide from a gaseous mixture comprising carbon dioxide.

As introduced above, employing an oleaginous fluid rather than an aqueous fluid such as water permits significant energy savings when the aspects of the present invention form part of a cyclic CCS undertaking. This is in part because the specific heat capacity of oleaginous fluids is lower than that of water. For example, a base oil of the type conventionally used as a lubricating oil typically has a specific heat capacity of 2.0 kJ kg⁻¹ K⁻¹. This is less than half of the specific heat capacity of water of 4.2 kJ kg⁻¹ K⁻¹, so the amount of energy required to maintain the required temperature differential for both capture and release of acidic gases is markedly lower. Notably, an oleaginous fluid may provide improved resilience of the acidic gas (especially carbon dioxide) separation composition to hotter gaseous mixtures, such as flue gases or exhaust gases, meaning that less energy needs to be expended to cool the gaseous mixture before introducing it to an acidic gas separation process, and less energy is required to heat the composition following separation of acidic gas separation composition to a temperature at which the acidic gas (especially carbon dioxide) is released from the acidic gas separation composition.

### Brief Description of the Drawings

FIGURE 1 shows a schematic representation of an apparatus or system suitable for the methods described in accordance with the present invention.
FIGURE 2 shows a graph of carbon dioxide loading achieved (in grams of CO₂ per gram of solvent) against organic base concentration for examples of the present invention.
FIGURE 3 shows a graph of carbon dioxide loading achieved (in moles of CO₂ per mole of solvent) against organic base concentration for examples of the present invention.
FIGURE 4 shows a graph of mass loss against time at 60°C for a comparative example and examples of the present invention.

### Detailed Description of the Invention

Compositions referred in accordance with any aspect of the present invention comprise a dispersion of at least one organic base and a base oil, the dispersion further comprising at least one surfactant. Accordingly, the compositions present in accordance with any aspect of the invention may comprise a dispersion of at least one organic base in a base oil, the dispersion further comprising at least one surfactant. As used herein, the term "dispersion" means a chemical system in which particles, in any state of matter, are distributed in another material of the same or different state of matter to the particles. The continuous phase (or external phase) is typically a liquid and the discontinuous phase (or internal phase), formed by the particles, is typically a liquid, a solid or a semi-solid, such as a gel or sol. The dispersion may therefore be a liquid-in-liquid dispersion and may therefore be alternatively described as an emulsion. An emulsion may be formed by using a liquid organic base or by using an organic base solubilised in a hydrophilic medium, such as an aqueous organic base. An organic base solubilised in a hydrophilic medium, or an aqueous organic base may be notably applied where the organic base is solid in standard conditions.

Many dispersions ordinarily exhibit stability for a finite period of time. Dispersion stability may be assessed by placing a 100 mL sample in a 100 mL borosilicate glass centrifuge tube, for example a conical bottom tube of length 203mm and neck ID 17mm, SKU 1197102. Two samples are taken, one sample taken from a position 1cm from the top and another taken from a position 1 cm from the bottom, using a syringe and analysed for total nitrogen content using ASTM D5291-21. This method is calibrated using commercially available standards defined in the test method to enable measurement of nitrogen in the range of interest. Acetanilide was used to calibrate for nitrogen content up to 10.36% by mass, and imidazole to calibrate up to 41.15% by mass. The top and bottom nitrogen determinations are compared using the reproducibility statement for the test method which states that the difference between two nitrogen determinations from the same sample should be no more than 0.02967 (X + 3) where X is the average of the two samples. Therefore, if the top and bottom nitrogen determinations agree to within the precision statement of the test method, the dispersion is deemed stable at the point in time at which the samples were taken. In preferred embodiments, the dispersion is stable (and may be measured in accordance with the method described above) for at least about 24 hours (or about 1 day), preferably for at least about 48 hours (or about 2 days), more preferably for at least about 1 (one) week, even more preferably for about 4 (four) weeks and even more preferably still stable for about 12 (twelve) weeks, as defined above. While it is preferred and understood that no upper limit on stability exists, examples include about 15 weeks; about 20 weeks; about 25 weeks; about 30 weeks; about 40 weeks; about 50 weeks; about 1 year; about 2 years; about 3 years; about 5 years; about 10 years; up until utilisation in a method, system, or use in accordance with the present invention; and indefinitely. Accordingly, the stability of the dispersion may be from about 24 hours (or 1 day) to about 15 weeks, about 24 hours (or 1 day) to about 20 weeks, about 24 hours (or 1 day) to about 25 weeks and so on, about 48 hours (or 2 days) to about 15 weeks, about 48 hours (or 2 days) to about 20 weeks, and so on; and also so on for each lower and upper limit provided above.

### Base oil

In respect of compositions relating to any aspect of the present invention, the base oil typically forms the continuous phase (also known as the external phase) of the dispersion or composition. Accordingly, the base oil would ordinarily be present in a significant amount, that is to say in an amount of from about 10%, preferably from about 20% to about 80%, more preferably from about 30% to about 70%, even more preferably from about 40% to about 60% and even more preferably still from about 45% to about 55%, in each case by mass of the base oil.

The base oil may be any liquid oleaginous medium or oleaginous fluid (also known as oleaginous liquid) and may alternatively be described in general as a liquid hydrophobic medium or hydrophobic fluid (also known as hydrophobic liquid). Accordingly, the base oil (or the molecules thereof) would typically consist of carbon atoms, hydrogen atoms and less than about 2% heteroatoms, preferably less than about 1% heteroatoms, more preferably less than about 0.5% heteroatoms, even more preferably less than about 0.2% heteroatoms and even more preferably still less than about 0.1% heteroatoms on a mass basis. In each case there may be a lower limit of zero, substantially zero (e.g. below the limit of detection), or only trace amounts of heteroatoms. The base oil may therefore include organic solvents such as hydrocarbon solvents, mineral oils, lubricant base stocks or other organic or hydrocarbonaceous (or predominantly hydrocarbonaceous) fluids, especially those meeting the definition of carbon atom, hydrogen atom and heteroatom contents above. Preferably the base oil will be non-volatile under the conditions of acidic gas separation and release. Volatility may be determined by the initial boiling point (IBP) of the liquid, as measured by ASTM 7500. Some preferred IBP temperatures for the base oil may therefore be at least about 100°C, preferably at least about 120°C, more preferably at least about 140°C and more preferably still at least about 160°C.

The base oil is also preferably non-polar, substantially non-polar, or of low polarity. The base oil may therefore be selected so that the solubility of the organic base in the base oil may be not greater than about 5 percent mass/mass (% m/m), preferably not greater than about 2% m/m, more preferably not greater than about 1% m/m, even more preferably not greater than about 0.5% m/m and even more preferably still not greater than about 0.1% m/m, measured under standard conditions.

The base oil may be comprised of one or more base stocks. That is to say, the base oil may be a single base stock or may comprise a mixture of base stocks. As defined by the American Petroleum Institute (API), a base stock is a lubricant component that is produced by a single manufacturer to the same specifications (independent of feed source or manufacturer's location); that meets the same manufacturer's specification; and that is identified by a unique formula, product identification number, or both. Base stocks may be manufactured using a variety of different processes including but not limited to distillation, solvent refining, hydrogen processing, oligomerization, esterification, and rerefining. Rerefined stock shall be substantially free from materials introduced through manufacturing, contamination, or previous use. Non-limiting examples of base stocks that may be used in or as the base oil include ExxonMobil AP/E CORE 100 / 150, ExxonMobil EHC 45 / 50 / 65 / 110, Chevron 100R, Yubase 2 / 4, ExxonMobil Spectrasyn 2 / 4.

In some preferred embodiments, the base oil may comprise or consist of Group I base stock, Group II base stock, Group III base stock, Group IV base stock or mixtures thereof, as defined in accordance with the API base stock classification system, as defined in Annex E of API 1509-2022, base oil interchangeability guidelines for passenger car motor oils and diesel engine oils. This system is described in Table 1 below, in which percentages given are mass percent.

**TABLE 1: API Base Stock Classification System**

| Group | Viscosity Index (x) | Saturates Content | Sulphur Content | Notes |
|---|---|---|---|---|
| I | 80 ≤ x < 120 | < 90 % and/or > 0.03% | | |
| II | 80 ≤ x < 120 | ≥ 90 % and ≤ 0.03% | | |
| III | x ≥ 120 | ≥ 90 % and ≤ 0.03% | | |
| IV | Not specified | Not specified | | All Poly Alpha Olefins (PAO) |
| V | Not specified | Not specified | | All other base stocks |

For the purposes of classifying a base stock, viscosity index may be measured according to ASTM D2270, saturates content may be measured according to ASTM D2007 and sulphur content may be measured according to one of ASTM D1552, D2622, D3120, D4294 and/or D4927. In each case, the API classification indicates that the most recent version of each standard shall be used. As such, ASTM D2270-10(2016) may be used to measure the viscosity index of a base stock, ASTM D2007-19(2020) may be used to measure the saturates content of a base stock and any of ASTM D1552-16(2021), D2622-21, D3120-08(2019), D4294-21, or D4927-20 may be used to measure the sulphur content of a base stock. The base stock(s) forming the base oil may be new (including synthetic), reused, rerefined or recycled base stocks.

In order to improve the energy efficiency of heating required to facilitate the acidic gas separation and release processes, a lower specific heat capacity of the base oil is desirable. In some preferred embodiments, the specific heat capacity of the base oil (or the separation composition) is accordingly less than about 4.2 kJ kg⁻¹ K⁻¹, preferably less than about 4.0 kJ kg⁻¹ K⁻¹, more preferably less than about 3.5 kJ kg⁻¹ K⁻¹, even more preferably less than about 3.0 kJ kg⁻¹ K⁻¹, such as, by way of non-limiting example, from about 1.0 kJ kg⁻¹ K⁻¹ to about 3.0 kJ kg⁻¹ K⁻¹, from about 1.5 kJ kg⁻¹ K⁻¹ to about 2.5 kJ kg⁻¹ K⁻¹ or from about 1.75 kJ kg⁻¹ K⁻¹ to about 2.25 kJ kg⁻¹ K⁻¹.

### Organic base

In respect of compositions relating to any aspect of the present invention, an organic base typically forms the discontinuous phase (also known as internal phase or dispersed phase) of the composition. Any organic base that is not miscible with the base oil may be employed in the present invention. As used herein, the term "not miscible" means that not greater than about 5 percent mass/mass (% m/m) of the organic base dissolves in the base oil, preferably not greater than about 2% m/m, more preferably not greater than about 1% m/m, even more preferably not greater than about 0.5% m/m and even more preferably still not greater than about 0.1% m/m, each measured under standard conditions.

Additionally or alternatively, the organic base may have a solubility in water under standard conditions of at least about 50 percent mass/mass (% m/m), preferably at least about 70% m/m, more preferably at least about 90% m/m, each measured under standard conditions.

Examples of organic bases include amines. Accordingly, in some preferred embodiments, the organic base is an amine, or alternatively described is an organic amine. Examples of organic amines include those with primary amine functionality, secondary amine functionality and/or tertiary amine functionality, which may be described as primary amines, secondary amines and tertiary amines. In some further preferred embodiments, the organic base comprises (or contains) primary amine functionality, secondary amine functionality, or both primary and secondary amine functionality. Accordingly, in these further preferred embodiments, the organic base comprises primary amines and/or secondary amines, including without limitation molecules that are both a primary amine and a secondary amine.

The organic base may be, or comprise, an amine which may contain additional functional groups such as alcohol or amide groups, or mixtures thereof. Useful amine compounds comprise at least one amine group and can also comprise one or more additional amine groups or other reactive or polar groups. These amines may be hydrocarbyl amines or may be predominantly hydrocarbyl amines in which the hydrocarbyl group includes other groups, e.g., hydroxy groups, alkoxy groups, amide groups, nitriles, carbonyls, imidazoline groups, and the like. Suitable hydrocarbyl amines include aryl, cycloalkyl and alkylamines. The amine compounds may have, or have on average, a ratio of carbon atoms to heteroatoms of from about 5:1 to about 1:20, preferably from about 4:1 to about 1:10, more preferably from about 3:1 to about 1:5, even more preferably from about 2:1 to about 1:4 and even more preferably still from about 1:1 to about 1:3. In combination with any of the ranges for the ratio of carbon atoms to heteroatoms above, the heteroatoms used for the purpose of determining said ratio are preferably selected from nitrogen and oxygen, more preferably nitrogen.

Where the organic base comprises, or is, an amine, the amine comprises a primary, secondary, tertiary, or mixed order amine or alkanolamine (the alkanolamine therefore also comprising primary, secondary, tertiary or mixed order amine functionality), or mixture thereof. Preferred amines include those selected from Piperazine, N-Methyldiethanolamine, Monoethanolamine, 2-Amino-2-methyl-1-propanol, Diethanolamine, 1-Piperazineethanol, Diisopropanolamine, 2-(Methylamino)ethanol, 2-(Dimethylamino)ethanol, 1-Piperazineethanamine, 2-(Ethylamino)ethanol, (2-Hydroxyethyl)ethylenediamine, 1-Methylpiperazine, 2-Methylpiperazine, 1,4-Piperazinediethanol, Diethylenetriamine, 3-Amino-1-propanol, Piperidine, Ethylenediamine, Triethylenetetramine, N-Methyl-1,3-propanediamine, 2,2-Dimethyl-1,3-propanediamine, (±)-1-Amino-2-propanol, Triethylamine, Tetraethylenepentamine, Dabco, 1-Ethylpiperazine, 2,2'-(1,2-Ethanediyldiimino)bis[ethanol], Putrescine, Morpholine, Diethylamine, Tris(2-aminoethyl)amine, (±)-2-Amino-1-propanol, 2-Aminoethylpiperazine, 1,3-Diamino-2-propanol, Hexahydro-2,4,6-trimethyl-1,3,5-triazine, Propylenediamine, Pentaethylenehexamine, Hexaethyleneheptamine and mixtures thereof. Particularly preferred amines include Piperazine, N-Methyldiethanolamine, Monoethanolamine, 2-Amino-2-methyl-1-propanol, Diethanolamine, 1-Piperazineethanamine, (2-Hydroxyethyl)ethylenediamine, Diethylenetriamine, Triethylenetetramine, Tetraethylenepentamine, 2-Aminoethylpiperazine, Propylenediamine, Pentaethylenehexamine, Hexaethyleneheptamine and mixtures thereof.

In some preferred embodiments, the organic base comprises both amine and hydroxyl functionality, or alternatively stated, is an alkanolamine and may be an alkanolamine selected from the list of amines or from the list of preferred amines above.

### Surfactant

The surfactant may also be described as an emulsifier and/or as a dispersant. A dispersant is an additive whose primary function is to hold oil-insoluble substances in suspension (in other words, a dispersant holds oil-insoluble substances in dispersion). For example, a dispersant maintains in suspension oil-insoluble substances, such as oil-insoluble components and in the context of the present invention, the organic base, thus preventing or reducing flocculation and resultant precipitation or deposition on surfaces. Dispersants typically comprise a long hydrocarbon chain with a polar head, the polarity being derived from the inclusion of heteroatoms, preferably heteroatoms covalently bonded to the hydrocarbon chain, and more preferably oxygen or nitrogen atoms. The hydrocarbon chain is an oleophilic group that confers oil-solubility to the surfactant and having, for example, a molecular weight of about 200 to about 50000 g/mol, about 300 to about 40000 g/mol, about 400 to about 30000 g/mol, about 500 to about 20000 g/mol, about 600 to about 10000 g/mol, about 700 to about 5000 g/mol, about 800 to about 2500 g/mol or about 950 to about 1200 g/mol, in increasing order of preference. Thus, the surfactant may comprise an oil-soluble polymeric backbone, such as an olefin polymer, and may comprise one or more olefin polymers, functionalised with at least one polar functional group. The preferred surfactants, particularly those with an oleophilic group having a molecular weight within the ranges above, may have a hydrophilic-lipophilic balance (HLB) value, which may be calculated using Griffin's Method, of from about 0.1 to about 6, such as from about 0.5 to about 6, more preferably from about 0.5 to about 5.75, such as from about 0.5 to about 5.5 or about 1 to about 4. As used herein, the term "polymer" (and commensurately the prefix "poly-") includes molecules formed from at least 2 monomer repeating chemical units, preferably having at least about 3, 4, 5, 6, 7, 8, 9, or 10 monomer repeating chemical units and up to about 1000, 500, 300, 200, 100, 50, 40, 30 or 20 monomer repeating chemical units, including without limitation homopolymers, copolymers (typically at least about 4, 5, 6, 7, 8, 9 or 10 repeat units and up to about 1000, 500, 300, 200, 100, 50, 40, 30 or 20 repeat units) and block copolymers (also typically at least about 4, 5, 6, 7, 8, 9 or 10 repeat units and up to about 1000, 500, 300, 200, 100, 50, 40, 30 or 20 repeat units). Also as used herein, the terms "olefin polymer," "poly(olefin)," "polyolefin" "poly(alkene)" and "polyalkene" "poly(alkylene)" and "polyalkylene" interchangably mean polymers of any olefinic monomer unit, that is to say any monomer unit comprising at least one C=C bond (any alkene), and preferably refers to hydrocarbonaceous alkenes, in this sense meaning alkenes or olefins consisting of carbon atoms and hydrogen atoms, or alternatively stated alkenes with no, or substantially no, heteroatoms.

A preferred class of olefin polymers are polybutenes, specifically polyisobutenes (PIB) or poly-n-butenes, such as may be prepared by polymerization of a C4 refinery stream. Another preferred olefin polymer is polyisoprene. The poly(olefin), polybutene, polyisobutene, poly-n-butene or polyisoprene chain preferably has a molecular mass of from about 700 to about 5000 g/mol, preferably from about 800 to about 2500 g/mol and more preferably from about 950 to about 1200 g/mol.

Dispersants include, for example, derivatives of long chain hydrocarbon-substituted carboxylic acids, examples being derivatives of high molecular weight hydrocarbyl-substituted succinic acid. Typically, a hydrocarbonaceous polymeric material, such as polyisobutylene or polyisoprene (but any olefin polymer, copolymer, or block co-polymer which is capable of functionalisation by reaction with maleic acid or anhydride to make a succinate), is reacted with an acylating group (such as maleic acid or anhydride) to form a hydrocarbon-substituted succinic acid (succinate) or succinic anhydride.

In embodiments, the at least one surfactant comprises one or more non-ionic surfactants, which may be desirably selected from one or more olefin polymers, functionalised with at least one polar functional group. In embodiments, the at least one surfactant comprises the reaction product or mixture of a succinic acid and an organic amine. The at least one surfactants comprises the reaction product or mixture of a poly(olefin) succinic acid and/or poly(olefin) succinic anhydride (such as poly(isobutylene) succinic acid) or poly(isobutylene) succinic anhydride, "PIBSA") with an organic amine or alkanolamine, preferably where said organic amine additionally comprises a hydroxy group (an alkanolamine).

Accordingly, the group of dispersants is constituted by hydrocarbon-substituted succinimides, made, for example, by reacting the above acids (or derivatives) with a nitrogen-containing compound: an organic amine or alkanolamine. In some preferred embodiments, the organic amine comprises primary amine functionality (e.g. is a primary amine) or may be a primary, secondary or tertiary alkanolamine, in this sense meaning an alkanolamine with primary, secondary or tertiary amine functionality. In some further preferred embodiments where the nitrogen-containing compound is an alkanolamine, the amine functionality of the alkanolamine is tertiary, including entirely tertiary, such that there may be no primary or secondary amine functionality in the alkanolamine. The nitrogen-containing compound may be the same as or different to the organic base.

Examples of such amines and alkanolamines that generally may be comprised in the nitrogen-containing compound include: N-Methyldiethanolamine, Monoethanolamine, 2-Amino-2-methyl-1-propanol, Diethanolamine, 1-Piperazineethanol, Triethanolamine, Diethylethanolamine, Diisopropanolamine, Diglycolamine, 2-(Methylamino)ethanol, 2-(Dimethylamino)ethanol, 1-Piperazineethanamine, 2-(Ethylamino)ethanol, (2-Hydroxyethyl)ethylenediamine, 1,4-Piperazinediethanol, Diethylenetriamine, 3-Amino-1-propanol, Triethylenetetramine, (±)-1-Amino-2-propanol, Tetraethylenepentamine, 2,2',-(1,2-ethanediyldiimino)bis[ethanol], Tris(2-aminoethyl)amine, (±)-2-Amino-1-propanol, 2-Aminoethylpiperazine, or mixtures thereof; preferred nitrogen-containing compounds are selected from N-Methyldiethanolamine, Monoethanolamine, Diethanolamine, 1-Piperazineethanol, Diethylethanolamine, 1-Piperazineethanamine, Tetraethylenepentamine or mixtures thereof; and a more preferred nitrogen-containing compound is Diethylethanolamine (DEAE). It is of particular convenience for the nitrogen-containing compound (organic amine or alkanolamine) to be the same as the organic base, so by way of non-limiting example, both the organic base forming a component of the dispersion and the organic amine both may be N-Methyldiethanolamine, both may be Monoethanolamine, both may be Diethanolamine, both may be 1-Piperazineethanol, both may be Diethylethanolamine, both may be 1-Piperazineethanamine or both may be Tetraethylenepentamine. Where a mixture of nitrogen-containing compounds (i.e. organic amines or alkanolamines) is used in the surfactant, the same mixture may be used as the organic bases in the dispersion, and commensurately where a mixture of organic bases is used in the dispersion, the same mixture may be used as the nitrogen-containing compounds (i.e. organic amines or alkanolamines) in the surfactant. It is to be understood that the surfactant may further react with the organic base (particularly where the organic base comprises primary amine functionality while the polar head, such as organic amine, in the surfactant does not) within the compositions and dispersions contemplated by the present invention, whether before, while or after being introduced to the systems of the present invention, and whether before or during utilisation in the methods and uses of the present invention. Accordingly, by way of non-limiting example, an organic base comprising primary amine functionality utilised in combination with a PIBSA-alkanolamine surfactant (derived from an alkanolamine without primary amine functionality) may displace the alkanolamine in the surfactant, resulting in (typically a small portion of) the organic base forming the surfactant head group in whole or in part, and the organic amine becoming a (typically minor) component of the remaining organic base.

In further preferred embodiments, the surfactant is, or comprises, the reaction product of a polyisobutylene succinic acid and an amine that also comprises a hydroxy group, e.g. an alkanolamine, notably selected from N-Methyldiethanolamine, Monoethanolamine, Diethanolamine, 1-Piperazineethanol, Diethylethanolamine, 1-Piperazineethanamine, Tetraethylenepentamine, such as Diethylethanolamine (DEAE) and especially wherein the alkanolamine is diethylethanolamine (DEAE), i.e. the surfactant is, or comprises, the reaction product of a polyisobutylene succinic acid and diethylethanolamine (DEAE). In either preferred embodiment, the polyisobutylene chain preferably may have a molecular weight of from about 700 to about 5000 g/mol, more preferably from about 800 to about 2500 g/mol and even more preferably from about 950 to about 1200 g/mol. The polyisobutylene may be replaced by polyisoprene.

Accordingly, a particularly preferred surfactant comprises the reaction product or mixture of polyisobutene succinic anhydride: 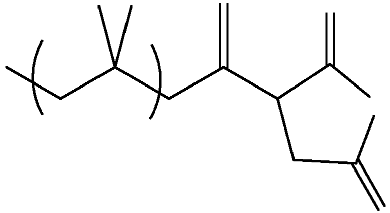 and/or polyisobutene succinic acid: 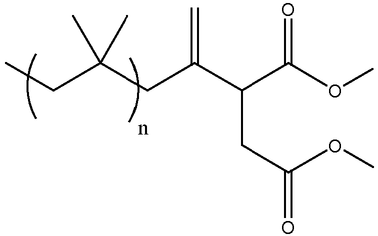 in either case wherein n is a positive integer from about 5 to about 200, with one or more organic amines selected from N-Methyldiethanolamine, Monoethanolamine, Diethanolamine, 1-Piperazineethanol, Diethylethanolamine, 1-Piperazineethanamine, Tetraethylenepentamine, such as Diethylethanolamine (DEAE): 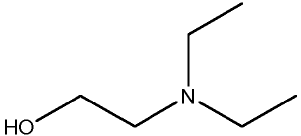 wherein preferably n is from about 10 to about 100, more preferably from about 12 to about 90, even more preferably from about 14 to about 45 and even more preferably still from about 16 to about 22, such as from about 17 to about 21.

In some embodiments, the surfactant may be present in the dispersion in an amount of from about 0.1% to about 10%, from about 0.5% to about 9.5%, from about 1% to about 9%, from about 2% to about 8%, from about 3% to about 7%, from about 4% to about 6% or from about 4.5% to about 5.5%, such as about 5%, by weight of the dispersion.

### Separation Composition

Compositions useful for separating acidic gases and, in the case of carbon dioxide, for undertaking carbon capture and release, as contemplated herein, are a dispersion of an organic base in a base oil with a surfactant. The organic base, base oil and surfactant represent the three major constituents of the compositions in accordance with the present invention.

Without wishing to be bound by theory, it is believed that the surfactant facilitates and stabilizes the formation of an internal phase, for example micelles, in a continuous phase. The organic base may form the internal phase (or discontinuous phase), the base oil may form the external phase (or continuous phase), or the base oil may form the internal phase (or discontinuous phase) and the organic base may form the external phase (or continuous phase). In either case, the surfactant may form a boundary layer (or interfacial phase) between the internal and external phases. Accordingly, the organic base may, with the surfactant in a boundary layer, form micelles in the base oil. Despite the surfactant therefore forming, in effect, a barrier between the gaseous mixture and the organic base, significant carbon capture is still observed, and a broader range of organic bases may therefore be used in combination with a medium in which they exhibit no or low solubility.

As the organic base provides the functionality of separating the acidic gases and, in the case of carbon dioxide undertaking the carbon capture, it is desirable that significant quantities of the organic amine are present in the composition. Accordingly, the organic base is present in an amount of at least 20%, even-mere-preferably at least 30% and even-more preferably at least 40% by weight of the composition. Accordingly, some preferred ranges of the amount of organic base present in the composition include from 20% to 80%, from 20% to 70%, from 20% to 60%, from 30% to 55% and from 40% to 50% by weight of the composition.

The basicity of the composition may also be described by means of the composition's Total Base Number (TBN), which as used herein may be measured in accordance with ASTM D4739. Accordingly, the TBN of the composition may be preferably in a range of from about 50 mg KOH/g to about 900 mg KOH/g, such as from about 75 mg KOH/g to about 800 mg KOH/g, preferably from about 100 mg KOH/g to about 700 mg KOH/g, such as from about 200 mg KOH/g to about 650 mg KOH/g or from about 250 mg KOH/g to about 500 mg KOH/g, as measured in accordance with ASTM D4739 (on an oil free active ingredient basis).

In some embodiments, the organic base forms, or is comprised within, an internal (or alternatively described, dispersed) phase in the base oil. The phase comprising the organic base may further comprise water but may preferably not further comprise water, i.e. the organic base may be dry, or substantially dry. Any water may be present in the composition before being exposed to the gaseous mixture, or may be derived from the gaseous mixture, such as where the gaseous mixtures is an exhaust gas (also known as a flue gas) from a fossil fuel combustion process and the composition absorbs water from the gaseous mixture.

It is desirable that the organic base (e.g. organic amine) is labile, or is not immobilised. The organic base may be described as labile if the organic base is cross-linked to a degree less than about 0.5%, preferably less than about 0.2%, more preferably less than about 0.1%, even more preferably less than about 0.01% and even more preferably still exhibits no, or substantially no, cross-linking; if the organic base has not been exposed to a cross-linking agent sufficient to result in substantial, preferably any, cross-linking; if the organic base is liquid (or in a solvated phase, such as an aqueous phase) at the operating conditions of the carbon capture process; and/or if the organic base has an number average molecular weight not more than about 1000 g/mol, such as no more than about 360 g/mol, preferably from about 31 g/mol to about 250 g/mol, more preferably from about 40 g/mol to about 150 g/mol, even more preferably from about 50 g/mol to about 100 g/mol and even more preferably still from about 60 g/mol to about 90 g/mol. Accordingly, the ranges of cross-linking specified above provide the maximum proportion of basic functionality, or maximum proportion of organic base molecules forming covalent bonds to other organic base molecules, with the remaining basic functionality of the organic base typically undergoing only hydrogen bonding or Van der Waals interactions to other molecules.

Without wishing to be bound by theory, it is believed that providing a labile organic bases improves the motility (or mobility) of the organic base in the dispersion, improving acidic gas uptake by improving the availability of the organic base. As cross-linking the organic base typically proceeds via the basic functionality, less such functionality is then available for carbon capture. By way of example, especially in the case when the organic base is an organic amine, the amine functionality (e.g. primary amine functionality or secondary amine functionality) is reacted in forming cross-linking, reducing the amine functionality for carbon capture.

The surfactant, meanwhile, will typically form a minor component of the composition. The amount of surfactant desired will depend on the amount of organic base that is to be dispersed in the base oil, as too little surfactant may reduce the stability of the dispersion while too much becomes free surfactant that offers little practical benefit, and may even destabilise the dispersion, while also potentially introducing other problems, such as raising the overall specific heat capacity of the composition. Some preferred ranges for the amount of surfactant present in the composition include from about 0.1% to about 10%, from about 0.5% to about 9.5%, from about 1% to about 9%, from about 2% to about 8%, from about 3% to about 7%, from about 4% to about 6% and from about 4.5% to about 5.5%, such as about 5%, by weight of the composition.

Having particular regard to the amount of organic base and the surfactant quantities described above, the remainder of the composition will typically consist of the base oil and other impurities or additives, in particular other impurities or additives dissolved in the base oil and therefore also forming part of the continuous phase where the base oil makes up the continuous phase. In some embodiments, to form an effective continuous phase, the base oil (which may include impurities and additives dissolved therein) may be present in a significant or majority amount, such as about 50% by volume of the composition. Some preferred ranges for the amount of base oil (or continuous phase) present in the composition include from about 10%, preferably from about 20% to about 80%, more preferably from about 30% to about 70%, even more preferably from about 40% to about 60% and even more preferably still from about 45% to about 55%, in each case by mass of the composition.

As referred to above, the separation composition may further comprise one or more additives, that may be in the internal or external phase, at the interface, or combinations thereof. Examples of such additives include antioxidants, corrosion inhibitors, antifoaming agents, pH modifiers, buffers, metal chelators, seal swell agents, flow improvers, carbon capture promoters (including water) and viscosity modifiers.

### Acidic Gas Separation Methods, and Systems

The present invention contemplates methods, and systems for the separation of acidic gases from a gaseous mixture comprising them. In particular, the present invention provides methods and systems for the separation (also referred to in the art as capture) of carbon dioxide from a gaseous mixture comprising carbon dioxide.

The methods according to these aspects of the present invention are achieved generally by contacting the gaseous mixture comprising the acidic gas (particularly carbon dioxide) with a separation composition as described in detail above.

According to the methods of separating acidic gases (especially carbon dioxide) from a gaseous mixture containing such acidic gases (as the context requires, carbon dioxide), therefore, the method comprises contacting the gaseous mixture with a dispersion of at least one organic base and a base oil, the dispersion further comprising at least one surfactant. Alternatively, in general, the method may comprise contacting the gaseous mixture with a composition comprising a dispersion of at least one organic base and a base oil, the dispersion further comprising at least one surfactant, notably wherein the composition is the separation composition as described in detail above. Accordingly, the composition, dispersion and components thereof may further have any of the features described above alone or in combination. It is also to be understood that the method may equally be described as contacting the dispersion (or composition) with the gaseous mixture.

Further optional steps may follow the steps above and include transferring the composition to a desorber and/or heating the composition to release (interchangeably desorb or remove) the acidic gas (especially carbon dioxide) from the composition. Also preferably, the composition may be introduced via a spraying or other droplet or narrow stream forming mechanism to improve the surface area of composition available to be accessed by the gaseous mixture in turn to improve acidic gas (especially carbon dioxide) separation. The composition, dispersion and components thereof may further have any of the features described above alone or in combination. The gaseous mixture may contact the dispersion at any temperature in which the dispersion is a liquid and/or fluid and the rate of carbon capture exceeds that of carbon release from the dispersion or from the organic base. In some preferred embodiments, the gaseous mixture contacts the dispersion at a temperature of from about 20 °C to about 100 °C such as any of about 20 °C, about 25 °C, about 30 °C, about 40 °C, about 50 °C or about 60 °C to any of about 100 °C, about 95 °C about 90 °C, about 80 °C, about 70 °C or about 60°C. As the dispersion may reasonably be expected to have a significantly higher specific heat capacity than the gaseous mixture, and be more massive, the expression may be alternatively described as the dispersion being at a temperature in the range. Typically, any step of releasing the acidic gas, such as carbon dioxide, from the dispersion would be undertaken by heating the dispersion to a temperature greater than that at which the gaseous mixture contacted the dispersion, for example to a temperature greater than about 60 °C, greater than about 70 °C, greater than about 80 °C, greater than about 100 °C or greater than about 120 °C. Exemplary temperature differences between carbon capture and carbon release steps include ranges with upper and lower bounds selected from about 20, 25, 30, 35, 40, 45, 50, 60, 70, 80 or 100 °C, such as from about 20 °C to about 100 °C, from about 20 °C to about 80 °C, from about 20 °C to about 70 °C and so on, from about 25 °C to about 100 °C, from about 25 °C to about 80 °C, from about 25 °C to about 70 °C and so on, and also so on for each combination of upper and lower limit from the list provided above. Exemplary such ranges include from about 20 °C to about 100 °C, from about 25 °C to about 80 °C, from about 30 °C to about 70 °C, from about 35 °C to about 60 °C, and from about 40 °C to about 50 °C.

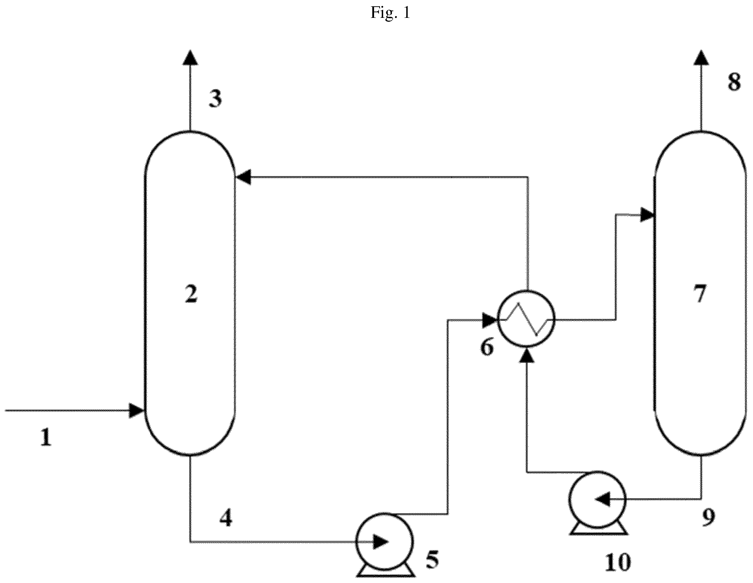

A schematic representation of an apparatus/system suitable for the methods described above is shown in Fig. 1. An example involves cooling a gaseous mixture (1) (containing acidic gases such as carbon dioxide) in a cooling tower (not shown), before contacting the gaseous mixture under optimum absorption conditions in an absorption tower (2), via such methods as described above, the absorption tower containing a composition comprising a dispersion of at least one organic base and a base oil, the dispersion further comprising at least one surfactant. This process reduces the concentration of acidic gas in the gaseous mixture (3), producing a rich solvent (4), in this sense meaning acidic gas rich, carbon rich or carbon dioxide rich. This could be a continuous process, whereby the rich solvent is transferred or pumped (5) to a desorber (7), optionally via a heat exchanger (6), where the rich solvent is heated to an optimum temperature using an appropriate method to release the captured acidic gas (8) and regenerate the lean solvent (9), in this sense meaning acidic gas lean, carbon lean, or carbon dioxide lean. The lean solvent is then transferred or pumped (10) back to the absorber (2), optionally via a heat exchanger (6), coming back into contact with the gaseous mixture and enabling the process to operate in a continuous fashion.

Also contemplated by the present invention are systems for separating acidic gases from a gaseous mixture comprising such acidic gases such as described above as used in the methods of the present invention, the systems comprising a vessel (a reactor) with means for fluid introduction and removal, wherein "fluid" includes a gas or a liquid, and the vessel may comprise means to introduce to the vessel and/or remove from the vessel one or more fluids such as gases or liquids, including the gaseous mixture comprising an acidic gas (especially a gaseous mixture comprising carbon dioxide) and a separation composition as hereinbefore described. **In** order to effect the acidic gas separation, the vessel contains a composition comprising a dispersion of at least one organic base and a base oil, the dispersion further comprising at least one surfactant, at least at the point of use for acidic gas separation. The composition, dispersion and components thereof may further have any of the features of the compositions, dispersions and components thereof described above, alone or in combination. Accordingly, the compositions and dispersions described herein may be used to separate acidic gases (for example, carbon dioxide) from a gaseous mixture containing such acidic gases, and to capture carbon dioxide from a gaseous mixture containing carbon dioxide.

As demonstrated in the examples included below, the methods, compositions and uses of the present invention may achieve a gram for gram (alternatively referred to as gram per gram, acidic gas or carbon dioxide loading measured in grams of carbon dioxide (or acidic gas) per gram of solvent, i.e. dispersion or composition, (g_{CO2}/gₛₒₗᵥₑₙₜ), of from about 0.001 g_{CO2}/gₛₒₗᵥₑₙₜ to about 1 g_{CO2}/gₛₒₗᵥₑₙₜ, from about 0.01 g_{CO2}/gₛₒₗᵥₑₙₜ to about 0.2 g_{CO2}/gₛₒₗᵥₑₙₜ or from about 0.04 g_{CO2}/gₛₒₗᵥₑₙₜ to about 0.15 g_{CO2}/gₛₒₗᵥₑₙₜ, such as from about 0.04 g_{CO2}/gₛₒₗᵥₑₙₜ to about 0.07 g_{CO2}/gₛₒₗᵥₑₙₜ (or from about 0.04 g_{CO2}/gₛₒₗᵥₑₙₜ to about 0.05 g_{CO2}/gₛₒₗᵥₑₙₜ), from about 0.07 g_{CO2}/gₛₒₗᵥₑₙₜ to about 0.09 g_{CO2}/gₛₒₗᵥₑₙₜ or from about 0.08 g_{CO2}/gₛₒₗᵥₑₙₜ to about 0.1 g_{CO2}/gₛₒₗᵥₑₙₜ, in each case where g_{CO2}/gₛₒₗᵥₑₙₜ may be replaced with g_{acidic gas}/gₛₒₗᵥₑₙₜ.

Also as demonstrated in the examples included below, the methods, compositions and uses of the present invention may achieve a mol for mol (alternatively referred to as mol per mol, acidic gas or carbon dioxide loading measured in moles of carbon dioxide (or acidic gas) per moles of organic base (such as amine) molecules in the solvent, i.e. dispersion or composition, (*n*_{CO2}/*n*ₐₘᵢₙₑ), of from about 0.01 *n*_{CO2}/*n*ₐₘᵢₙₑ to about 1 *n*_{CO2}/*n*ₐₘᵢₙₑ, from about 0.1 *n*_{CO2}/*n*ₐₘᵢₙₑ to about 0.8 *n*_{CO2}/*n*ₐₘᵢₙₑ, from about 0.2 *n*_{CO2}/*n*ₐₘᵢₙₑ to about 0.6 *n*_{CO2}/*n*ₐₘᵢₙₑ, or from about 0.3 *n*_{CO2}/*n*ₐₘᵢₙₑ to about 0.5 *n*_{CO2}/*n*ₐₘᵢₙₑ, in each case where *n*_{CO2}/*n*ₐₘᵢₙₑ may be replaced with *n*_{acidic gas}/*n*ₐₘᵢₙₑ.

The dimensions and values disclosed herein are not to be understood as being strictly limited to the exact numerical values recited. Rather, unless otherwise specified, each such dimension is intended to mean both the recited value and a functionally equivalent range surrounding that value. For example, a dimension disclosed as "40 mm" is intended to mean "about 40 mm."

Every document cited herein, including any cross referenced or related patent or application, is hereby incorporated herein by reference in its entirety unless expressly excluded or otherwise limited. The citation of any document is not an admission that it is prior art with respect to any invention disclosed or claimed herein or that it alone, or in any combination with any other reference or references, teaches, suggests or discloses any such invention.

Further, to the extent that any meaning or definition of a term in this document conflicts with any meaning or definition of the same term in a document incorporated by reference, the meaning or definition assigned to that term in this document shall govern.

While certain particular embodiments of the present invention have been illustrated and described herein, it would be apparent to those skilled in the art that various other changes and modifications can be made without departing from the scope of the invention, and it is intended, accordingly, to cover in the accompanying claims all such changes and modifications that are within the scope of this invention.

Unless otherwise stated or evidently required to be performed under different conditions, measurements described herein are made under standard conditions.

### Examples

The invention is further detailed below with reference to the following non-limiting examples:

### Example 1 - Preparation of Surfactants

### Example 1.1 - Polyisobutylsuccinimide diethylethanolamine (PIBSA-DEAE)

220 g of polyisobutenyl succinic anhydride (PIBSA), with molecular weight of approximately 1000 Mn and saponification number of 102 mgKOH/g, was charged to a 0.5L baffled reactor, followed by 46 g of a low viscosity base oil. The reaction mixture was subsequently heated to 90 °C with stirring before the addition of 26 g of diethylethanolamine, purchased from Thermo Scientific (CAS: 102-71-6). The temperature of the reaction was then increased to 120 °C and maintained for 3.5 hours before removing the heat. Allowed to cool overnight, the mixture was transferred to a rotary evaporator in a pear-shaped flask and heated to 90 C for 4 hours at 30-40 mbar before removing from heat and decanting the product. The resulting product had an approximate active ingredient proportion of 79 wt.%.

### Example 1.2 - Polyisobutylsuccinimide methyl diethanolamine (PIBSA-MDEA)

4505 g of polyisobutenyl succinic anhydride (PIBSA), with molecular weight of approximately 1000 Mn and saponification number of 102 mgKOH/g, was charged to a 10L baffled reactor, followed by 3329 g low viscosity base oil. The reaction mixture was subsequently heated to 90 °C with stirring before the addition of 498 g of N-methyl diethanolamine, purchased from Acros (CAS: 99 105-59-9). The temperature of the reaction was then increased to 120 °C and maintained for 3.5 hours before removing from heat and decanting the product. The resulting product had a measured nitrogen content of 0.62% w/w as measured via ASTM D5291. The resulting product had an approximate active ingredient proportion of 60 wt.%.

### Example 1.3 - Polyisobutylsuccinimide triethanolamine (PIBSA-TEA)

396 g of polyisobutenyl succinic anhydride (PIBSA), with molecular weight of approximately 1000 Mn and saponification number of 102 mgKOH/g, was charged to a 1L baffled reactor, followed by 368 g of low viscosity base oil. The reaction mixture was subsequently heated to 90 °C with stirring before the addition of 54 g of triethanolamine, purchased from Thermo Scientific (CAS: 102-71-6). The temperature of the reaction was then increased to 120 °C and maintained for 3.5 hours before removing from heat and decanting the product. The resulting product had a measured nitrogen content of 0.57% w/w as measured via ASTM D5291. The resulting product had an approximate active ingredient proportion of 55 wt.%.

### Example 2 - Preparation of Acidic Gas Separation Compositions

93.59g (±3%) of Example 1.1 was added to 396.41g (±1%) of Group II base oil (Chevron 100R) in a 1.5 litre glass beaker, weighed out using a Sartorius Combics 1 balance. The mixture was stirred using an overhead stirrer (IKA EUROSTAR 40) at 200RPM, heated to 60 °C using a hotplate (CAT M26 G2), and held at that temperature and stirring for 30 mins. The mixture was then cooled and transferred to a mixer (Silverson L5M-A) fitted with a Silverson emulsor screen workhead. 210g of monoethanolamine organic base (CAS: 141-43-5) was then added to the mixture and the resulting mixture was heated to 70 °C using a hotplate (CAT M26 G2) while stirring at the maximum stirring speed achievable before splashing was observed outside the confines of the 1.5 litre glass beaker (stirred at 4000 RPM) and held at that temperature and stirring for 6 hours, before being decanted immediately and allowed to cool to room temperature.

This experimental method was used with a range of quantities and identities of chemical components added as detailed in Table 2. Amines used in these examples include monoethanolamine (MEA, CAS: 141-43-5, 99% purity), alternatively 2-amino-2-methyl-1-propanol (AMP, CAS: 124-68-5, 95% purity, 5% water impurity), and also alternatively piperazine (PZ, CAS: 110-85-0, 99% purity).

**TABLE 2: Acidic Gas Separation Compositions**

| **Example** | **Amine / wt.%** | **Surfactant / wt.%** | **Base Oil / wt.%** |
|---|---|---|---|
| **Example 2.1** | MEA / 30 | Example 1.1 / 0.25 | Chevron 100R / 69.75 |
| **Example 2.2** | MEA / 30 | Example 1.1 / 0.75 | Chevron 100R / 69.25 |
| **Example 2.3** | MEA / 30 | Example 1.1 / 2.25 | Chevron 100R / 67.75 |
| **Example 2.4** | MEA / 30 | Example 1.1 / 6.75 | Chevron 100R / 63.25 |
| **Example 2.5** | MEA / 30 | Example 1.1 / 13.37 | Chevron 100R / 56.63 |
| **Example 2.6** | MEA / 30 | Example 1.1 / 20.25 | Chevron 100R / 49.75 |
| **Example 2.7^{‡}** | - / 0 | Example 1.1 / 6.75 | Chevron 100R / 93.25 |
| **Example 2.8^{‡}** | MEA / 10 | Example 1.1 / 6.75 | Chevron 100R / 83.25 |
| **Example 2.9** | MEA / 20 | Example 1.1 / 6.75 | Chevron 100R / 73.25 |
| **Example 2.10** | MEA / 40 | Example 1.1 / 6.75 | Chevron 100R / 53.25 |
| **Example 2.11** | MEA / 50 | Example 1.1 / 6.75 | Chevron 100R / 43.25 |
| **Example 2.12** | MEA / 60 | Example 1.1 / 6.75 | Chevron 100R / 33.25 |
| **Example 2.13*** | AMP / 31.58 | Example 1.1 / 2.25 | Chevron 100R / 67.75 |
| **Example 2.14*** | AMP / 31.58 | Example 1.1 / 6.75 | Chevron 100R / 63.25 |
| **Example 2.15*** | AMP / 31.58 | Example 1.1 / 13.37 | Chevron 100R / 56.63 |
| **Example 2.16^{†}** | AMP / 13.5 | Example 1.1 / 13.37 | Chevron 100R / 36.63 |
| | PZ / 6.5 | | |
| | Water / 30 | | |
| **Example 2.17** | MEA / 30 | Example 1.2 / 8.89 | Chevron 100R / 61.11 |
| **Example 2.18** | MEA / 30 | Example 1.3 / 8.89 | Chevron 100R / 61.11 |
| **Example 2.19** | MEA / 30 | Example 1.1 / 6.75 | Spectrasyn 2 / 63.25 |
| **Example 2.20** | MEA / 30 | Example 1.1 / 6.75 | Spectrasyn 4 / 63.25 |

| | | | |
|---|---|---|---|
| * heated to 50°C in lieu of 70°C (after addition of organic base) owing to the flash point of AMP. ^{†} stirrer speed 5300 RPM in lieu of 4000 RPM. ^{‡} example not according to the claimed invention | | | |

### Example 3 - Carbon Dioxide Absorption Experiment

Capture solvent was charged into a 200mL jacketed glass reactor, fitted with an oil bath circulator to control the temperature (Huber CC308), a thermocouple, and an overhead stirrer (Heidolph Hei-TORQUE Ultimate 400). Gas flow enters the bottom of the reactor via Swagelok tubing through a sintered glass filter, contacting the solvent, and exits the reactor through a condenser cooled to -15 °C (0 °C for aqueous systems) using a chiller (Huber Minichiller 300). Calibrated mass flow controllers (Bronkhorst EL-Flow Select) and other accessories (such as the oil bath, chiller, and overhead stirrer) were controlled via a serial box (Brainboxes US-279 8xRS232) and PC (Syrris Atlas PC Software 1) which were used to control the flow of gas entering the reactor, and to measure the gas exiting the reactor, so that CO₂ uptake amounts could be calculated.

In a typical absorption experiment (unless stated otherwise), a measured amount of capture solvent (≈70g) was charged into the reactor under a flow of 0.3 g·min⁻¹ N₂, and the mass was measured using a Sartorius MCA524S-2S00-I balance (± 0.05mg). The reactor was then assembled with the thermocouple, condenser and overhead stirrer. The temperature of the reactor was set to 40 °C and the overhead stirrer to 500RPM. After temperature equilibrium was reached (ca. 15 mins), the CO₂ uptake measurement was started by introducing CO₂ into the gas feed at 14 wt.% concentration with a N₂ diluent gas, with a total flow rate of 0.3 g·min⁻¹. To calculate the g_{CO2}/gₛₒₗᵥₑₙₜ loading value, the number of grams of CO₂ absorbed by the solvent was divided by the number of grams of solvent charged to the reactor. This also allows for the number of moles of CO₂ per number of moles of amine (*n*_{CO2}/*n*ₐₘᵢₙₑ) to be calculated.

The absorption experiment was then stopped after saturation of the solvent by CO₂ was observed, typically after 180mins, dependant on the amount of organic base present in the composition of the solvent.

A first set of absorption experiments using the procedure above was undertaken, varying the concentration of PIBSA-DEAE surfactant (of Example 1.1) while maintaining the concentration and identity of organic base (monoethanolamine). The results appear in Table 3 showing significant CO₂ loading achieved by the separation composition across a range of surfactant levels, with a preference for reducing surfactant owing to the slightly reduced *n*_{CO2}/*n*ₐₘᵢₙₑ CO₂ loading at higher surfactant levels, indicating a reduction in organic base availability. These results compare favourably with an aqueous solution of 30 wt.% monoethanolamine, which may typically achieve CO₂ loadings of 0.129 g_{CO2}/gₛₒₗᵥₑₙₜ and 0.597 *n*_{CO2}/*n*ₐₘᵢₙₑ, notably in the context of the energetic savings offered by the considerably lower specific heat capacity of the composition.

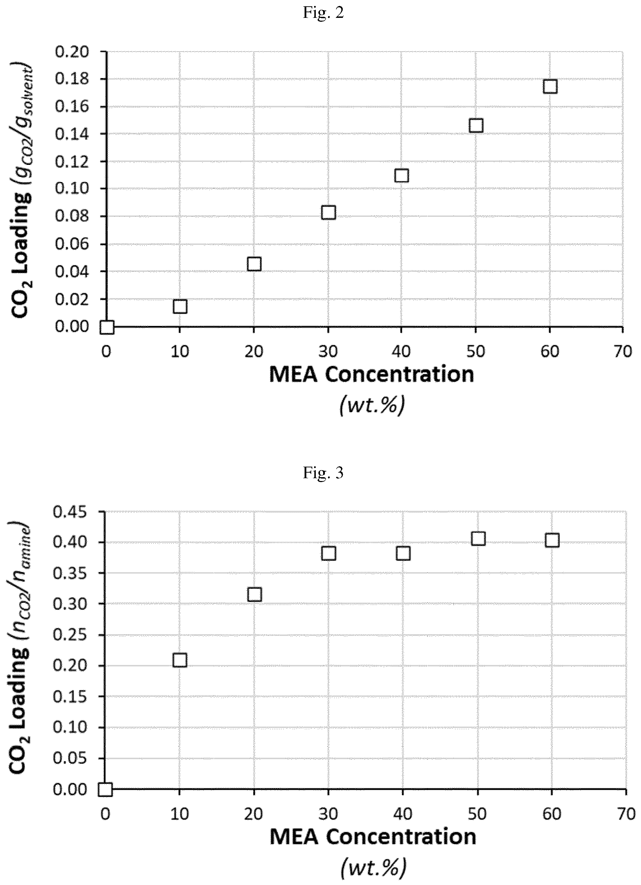

A second set of absorption experiments using the procedure above was further undertaken, varying the concentration of monoethanolamine organic base while maintaining the concentration and identity of PIBSA-DEAE surfactant (of Example 1.1) in the composition of Example 2. The results of this second set of experiments appear in Table 4, Figure 2 and Figure 3 showing significant CO₂ loading achieved by the separation composition across a range of organic base levels in a broadly linear relationship. As the organic base concentration was increased, in addition to the g_{CO2}/gₛₒₗᵥₑₙₜ CO₂ loading increasing, it was also observed that the *n*_{CO2}/*n*ₐₘᵢₙₑ CO₂ loading also increased, indicating that the overall availability of the organic base present, not merely the quantity, was increased at higher concentrations.

A third set of experiments using the procedure above was further undertaken, varying the concentration of PIBSA-DEAE surfactant (of Example 1.1), and the identity of the organic base while maintaining the concentration of the organic base in the composition of Example 2. The results of this third set of experiments appear in Table 5 showing that dispersions of different organic bases at different surfactant concentrations can be utilised in the present invention to capture acidic gases such as CO₂. Furthermore, Table 5 demonstrates that complex mixtures of two or more components (amines or other compounds in the internal phase, such as water) are capable of forming a dispersion to capture CO₂, in this specific case, AMP, PZ and water.

A fourth set of experiments using the procedure above was further undertaken, varying the identity of the surfactant (of Example 1.1, 1.2, 1.3) while maintaining the concentration and identity of the organic base in the composition of Example 2. The results of this fourth set of experiments appear in Table 6 showing that surfactants with different alkanolamine headgroups can be used to produce dispersions capable of achieving similar CO₂ loadings.

A fifth set of experiments using the procedure above was further undertaken, varying the identity of the base oil while maintaining the concentration and identity of the monoethanolamine organic base and while maintaining the concentration and identity of PIBSA-DEAE surfactant (of Example 1.1) in the composition of Example 2. The results of this fifth set of experiments appear in Table 7 indicating that different base oils can be used to produce dispersions capable of achieving similar CO₂ loadings.

**TABLE 3: Carbon dioxide separation results with varying concentration of PIBSA-DEAE surfactant (Example 1.1) and fixed concentration of monoethanolamine organic base (30 wt.%)**

| **Example** | **PIBSA-DEAE** *(wt. %)* | **CO₂ Loading** | |
|---|---|---|---|
| | | *g_{CO2}*/*gₛₒₗᵥₑₙₜ* | *n_{CO2}*/*nₐₘᵢₙₑ* |
| **Example 2.1** | 0.25 | 0.085 | 0.395 |
| **Example 2.2** | 0.75 | 0.088 | 0.406 |
| **Example 2.3** | 2.25 | 0.090 | 0.418 |
| **Example 2.4** | 6.75 | 0.083 | 0.383 |
| **Example 2.5** | 13.37 | 0.082 | 0.379 |
| **Example 2.6** | 20.25 | 0.072 | 0.335 |

**TABLE 4: Increasing concentrations (wt.%) of monoethanolamine in Example 2.2 with fixed PIBSA-DEAE (Example 1.1) concentration (6.75 wt.%)**

| **Example** | **Monoethanolamine** *(wt. %)* | **CO₂ Loading** | |
|---|---|---|---|
| | | *g_{CO2}*/*gₛₒₗᵥₑₙₜ* | *n_{CO2}*/*nₐₘᵢₙₑ* |
| **Example 2.7^{‡}** | 0 | 0.000 | 0.000 |
| **Example 2.8^{‡}** | 10 | 0.015 | 0.210 |
| **Example 2.9** | 20 | 0.046 | 0.316 |
| **Example 2.4** | 30 | 0.083 | 0.383 |
| **Example 2.10** | 40 | 0.110 | 0.383 |
| **Example 2.11** | 50 | 0.146 | 0.406 |
| **Example 2.12** | 60 | 0.175 | 0.404 |

| | | | |
|---|---|---|---|
| ^{‡} example not according to the claimed invention | | | |

**TABLE 5: Increasing concentrations (wt.%) of PIBSA-DEAE surfactant (Example 1.1) with different amines**

| **Example** | **PIBSA-DEAE** *(wt. %)* | **Organic Base** | **wt. %** | **CO₂ Loading** | |
|---|---|---|---|---|---|
| | | | | *g_{CO2}*/*gₛₒₗᵥₑₙₜ* | *n_{CO2}*/*nₐₘᵢₙₑ* |
| **Example 2.3** | 2.25 | MEA | 30 | 0.090 | 0.418 |
| **Example 2.4** | 6.75 | MEA | 30 | 0.083 | 0.383 |
| **Example 2.5** | 13.37 | MEA | 30 | 0.082 | 0.379 |
| **Example 2.13** | 2.25 | AMP | 31.58 | 0.043 | 0.288 |
| **Example 2.14** | 6.75 | AMP | 31.58 | 0.046 | 0.312 |
| **Example 2.15** | 13.37 | AMP | 31.58 | 0.043 | 0.289 |
| **Example 2.16** | 13.37 | AMP | 13.5 | 0.061 | 0.61 |
| | | PZ | 6.5 | | |
| | | Water | 30 | | |

**TABLE 6. Fixed concentration of monoethanolamine (30 wt.%) with different surfactants at matched active ingredient concentration**

| **Example** | **Surfactant** | **wt.%** | **MEA** *(wt. %)* | **CO₂ Loading** | |
|---|---|---|---|---|---|
| | | | | *g_{CO2}*/*gₛₒₗᵥₑₙₜ* | *n_{CO2}*/*nₐₘᵢₙₑ* |
| **Example 2.4** | Example 1.1 | 6.75 | 30 | 0.083 | 0.383 |
| **Example 2.17** | Example 1.2 | 8.89 | 30 | 0.076 | 0.353 |
| **Example 2.18** | Example 1.3 | 8.89 | 30 | 0.079 | 0.365 |

**TABLE 7. Fixed concentration of monoethanolamine (30 wt.%) and PIBSA-DEAE surfactant (Example 1.1) (6.75 wt.%) with different base stocks**

| **Example** | **Base Oil** | **CO₂ Loading** | |
|---|---|---|---|
| | | *g_{CO2}*/*gₛₒₗᵥₑₙₜ* | *n_{CO2}*/*nₐₘᵢₙₑ* |
| **Example 2.4** | Chevron 100R | 0.083 | 0.383 |
| **Example 2.19** | Spectrasyn 2 | 0.076 | 0.354 |
| **Example 2.20** | Spectrasyn 4 | 0.081 | 0.375 |

### Example 4 - Solvent Thermal Stability

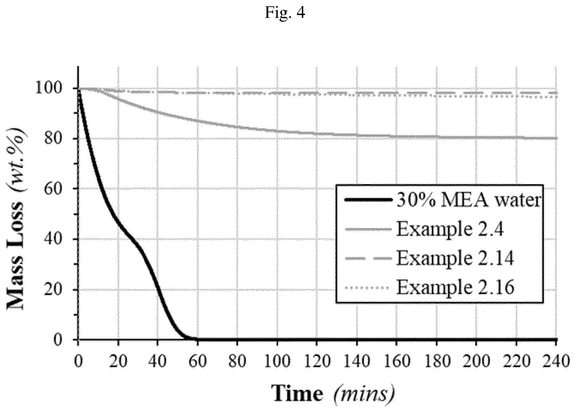

Thermogravimetric analysis (TGA) experiments were carried out using a TA Instruments TGA Q5000 by loading the sample into the instrument, equilibrating the temperature at 30 °C under a nitrogen flow of 10 cm³·min⁻¹, and then increasing the temperature to 60 °C at 3 °C·min⁻¹ and holding at 60 °C for at least 4 hours under nitrogen flow. The results of this experiment appear in Figure 4 showing that a greater volatile loss is observed for the aqueous MEA solvent in contrast to the examples of the invention, demonstrating a further unexpected advantage of utilising dispersions as described herein in reducing volatile losses.

## Claims

1. A method of separating acidic gases from a gaseous mixture containing such acidic gases, the method comprising contacting the gaseous mixture with a dispersion of at least one organic base and a base oil, the dispersion further comprising at least one surfactant, wherein the at least one surfactant comprises the reaction product or mixture of a poly(olefin) succinic acid and/or poly(olefin) succinic anhydride with an organic amine or alkanolamine, and
wherein the organic base is present in an amount of at least 20% by weight of the dispersion.

2. A method according to Claim 1, wherein the at least one organic base contains amine functionality, preferably selected from primary amine functionality, secondary amine functionality, tertiary amine functionality, or combinations thereof and more preferably selected from primary amine functionality, secondary amine functionality or both primary and secondary amine functionality.

3. A method according to Claim 2 wherein the at least one organic base further comprises a hydroxy group.

4. A method according to any preceding claim wherein at least one organic base is selected from Piperazine, N-Methyldiethanolamine, Monoethanolamine, 2-Amino-2-methyl-1-propanol, Diethanolamine, 1-Piperazineethanol, Diisopropanolamine, 2-(Methylamino)ethanol, 2-(Dimethylamino)ethanol, 1-Piperazineethanamine, 2-(Ethylamino)ethanol, (2-Hydroxyethyl)ethylenediamine, 1-Methylpiperazine, 2-Methylpiperazine, 1,4-Piperazinediethanol, Diethylenetriamine, 3-Amino-1-propanol, Piperidine, Ethylenediamine, Triethylenetetramine, N-Methyl-1,3-propanediamine, 2,2-Dimethyl-1,3-propanediamine, (±)-1-Amino-2-propanol, Triethylamine, Tetraethylenepentamine, Dabco, 1-Ethylpiperazine, 2,2'-(1,2-Ethanediyldiimino)bis[ethanol], Putrescine, Morpholine, Diethylamine, Tris(2-aminoethyl)amine, (±)-2-Amino-1-propanol, 2-Aminoethylpiperazine, 1,3-Diamino-2-propanol, Hexahydro-2,4,6-trimethyl-1,3,5-triazine, Propylenediamine, and mixtures thereof.

5. A method according to any preceding claim wherein the at least one surfactant comprises one or more non-ionic surfactants.

6. A method according to any preceding claim wherein the at least one surfactant further comprises one or more olefin polymers, functionalised with at least one polar functional group.

7. A method according to any preceding claim wherein the poly(olefin) has a molecular mass of from 200 to 50000 g/mol, from 300 to 40000 g/mol, from 400 to 30000 g/mol, from 500 to 20000 g/mol, from 600 to 10000 g/mol, from 700 to 5000 g/mol, from 800 to 2500 g/mol or from 950 to 1200 g/mol.

8. A method according to any preceding claim wherein the organic amine comprises primary amine functionality.

9. A method according to any preceding claim wherein the organic amine is selected from N-Methyldiethanolamine, Monoethanolamine, 2-Amino-2-methyl-1-propanol, Diethanolamine, 1-Piperazineethanol, Triethanolamine, Diethylethanolamine, Diisopropanolamine, Diglycolamine, 2-(Methylamino)ethanol, 2-(Dimethylamino)ethanol, 1-Piperazineethanamine, 2-(Ethylamino)ethanol, (2-Hydroxyethyl)ethylenediamine, 1,4-Piperazinediethanol, Diethylenetriamine, 3-Amino-1-propanol, Triethylenetetramine, (±)-1-Amino-2-propanol, Tetraethylenepentamine, 2,2',-(1,2-ethanediyldiimino)bis[ethanol], Tris(2-aminoethyl)amine, (±)-2-Amino-1-propanol, 2-Aminoethylpiperazine, or mixtures thereof; preferably wherein the organic amine is selected from N-Methyldiethanolamine, Monoethanolamine, Diethanolamine, 1-Piperazineethanol, Diethylethanolamine, 1-Piperazineethanamine, Tetraethylenepentamine or mixtures thereof.

10. A method according to any preceding claim wherein the poly(olefin) succinic acid or anhydride is selected from poly(isoprene) succinic acid, poly(isoprene) succinic anhydride, poly(isobutylene) succinic acid, poly(isobutylene) succinic anhydride or a mixture or combination thereof, preferably wherein the poly(olefin) succinic acid or anhydride is poly(isobutylene) succinic acid or poly(isobutylene) succinic anhydride.

11. A method according to any preceding claim wherein the surfactant comprises the reaction product or mixture of:
a: 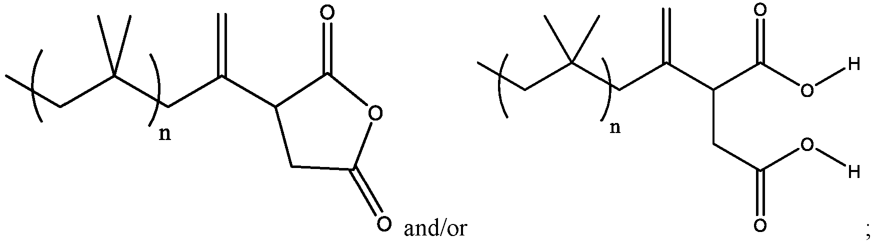
with b: one or more organic amines selected from N-Methyldiethanolamine, Monoethanolamine, Diethanolamine, 1-Piperazineethanol, Diethylethanolamine, 1-Piperazineethanamine, Tetraethylenepentamine;
wherein n is a positive integer from 5 to 200, preferably from 10 to 100, more preferably from 12 to 90, even more preferably from 14 to 45, even more preferably still from 16 to 22, and further preferably from 17 to 21.

12. A method according to any preceding claim wherein the base oil comprises or consists of one or more Group I base stocks, Group II base stocks, Group III base stocks, Group IV base stocks, preferably Group IV.

13. A method according to any preceding claim wherein the acidic gas separated from the gaseous mixture comprises, or is, carbon dioxide.

14. A method according to any preceding claim wherein the at least one organic base forms an internal phase in the base oil, preferably wherein the surfactant forms a boundary layer between the organic base and the base oil.

15. A method according to any preceding claim wherein the organic base is present in an amount of from 20% to 46%, preferably from 30% to 45% and even more preferably from 40% to 45% by weight of the dispersion.

16. A method according to any preceding claim wherein the base oil is present in an amount of from 10% to 90% by weight of the dispersion, preferably from 20% to 80%, more preferably from 30% to 70%, even more preferably from 40% to 60% and even more preferably still from 45% to 55%, in each case by weight of the dispersion.

17. A method according to any preceding claim wherein the surfactant is present in an amount of from 0.1% to 10%, preferably from 1% to 9%, more preferably from 2% to 8%, even more preferably from 3% to 7%, even more preferably still from 4% to 6% and further preferably from 4.5% to 5.5%, by weight of the dispersion.

18. A method according to any preceding claim, the method further comprising one or more of the steps of:
a. removing the gaseous mixture from contact with or introduction to the dispersion,
b. transferring the dispersion to a desorber, and/or
c. heating the dispersion, preferably to a temperature from 20 °C to 100 °C above the dispersion temperature when the gaseous mixture contacted the dispersion, more preferably to a temperature from 25 °C to 80 °C greater, even more preferably to a temperature from 30 °C to 70 °C greater, even more preferably still from 35 °C to 60 °C greater, and yet more preferably from about 40 °C to about 50 °C greater, to release the separated acidic gas;
after contacting the gaseous mixture with the dispersion.

19. A composition for separating acidic gases from a gaseous mixture comprising such acidic gases, the composition comprising a dispersion of at least one labile organic base in a base oil, the dispersion further comprising at least one surfactant, wherein the at least one surfactant comprises the reaction product or mixture of a poly(olefin) succinic acid and/or poly(olefin) succinic anhydride with an organic amine or alkanolamine,
wherein the organic base is present in an amount of at least 20% by weight of the dispersion preferably wherein the dispersion is further defined in accordance with any of claims 2 to 17.

20. A system for separating acidic gases from a gaseous mixture comprising such acidic gases, comprising a vessel with means for fluid introduction and removal, wherein the vessel contains a composition according to Claim 19.

21. Use of a composition comprising a dispersion of at least one organic base and a base oil, the composition further comprising at least one surfactant, wherein the at least one surfactant comprises the reaction product or mixture of a poly(olefin) succinic acid and/or poly(olefin) succinic anhydride with an organic amine or alkanolamine, and
wherein the organic base is present in an amount of at least 20% by weight of the dispersion to separate acidic gases from a gaseous mixture containing such acidic gases.

22. Use according to claim 21 wherein the acidic gas is carbon dioxide.

23. Use according to any of claims 21 to 22 wherein the dispersion is defined in accordance with any of claims 2 to 17.

## Patentansprüche

1. Verfahren zum Abtrennen saurer Gase von einer gasförmigen Mischung, die solche sauren Gase enthält, bei dem die gasförmige Mischung mit einer Dispersion von mindestens einer organischen Base und Basisöl kontaktiert wird, wobei die Dispersion des Weiteren mindestens ein Tensid umfasst, wobei das mindestens eine Tensid das Reaktionsprodukt oder eine Mischung von Poly(olefin)bernsteinsäure und/oder Poly(olefin)bernsteinsäureanhydrid mit organischem Amin oder Alkanolamin umfasst, und
wobei die organische Base in einer Menge von mindestens 20 Gew.% in der Dispersion vorhanden ist.

2. Verfahren nach Anspruch 1, bei dem die mindestens eine organische Base Aminfunktionalität enthält, vorzugsweise ausgewählt aus primärer Aminfunktionalität, sekundärer Aminfunktionalität, tertiärer Aminfunktionalität oder Kombinationen davon und bevorzugter ausgewählt ist aus primärer Aminfunktionalität, sekundärer Aminfunktionalität oder sowohl primärer als auch sekundärer Aminfunktionalität.

3. Verfahren nach Anspruch 2, bei dem die mindestens eine organische Base des Weiteren eine Hydroxygruppe umfasst.

4. Verfahren nach einem der vorhergehenden Ansprüche, bei dem die mindestens eine organische Base ausgewählt ist aus Piperazin, N-Methyldiethanolamin, Monoethanolamin, 2-Amino-2-methyl-1-propanol, Diethanolamin, 1-Piperazinethanol, Diisopropanolamin, 2-(Methylamino)ethanol, 2-(Dimethylamino)ethanol, 1-Piperazinethanamin, 2-(Ethyla-mino)ethanol, (2-Hydroxyethyl)ethylendiamin, 1-Methylpiperazin, 2-Methylpiperazin, 1,4-Piperazindiethanol, Diethylentriamin, 3-Amino-1-propanol, Piperidin, Ethylendiamin, Triethylentetramin, N-Methyl-1,3-propandiamin, 2,2-Dimethyl-1,3-propandiamin, (±)-1-Amino-2-propanol, Triethylamin, Tetraethylenpentamin, Dabco, 1-Ethylpiperazin, 2,2'-(1,2-Ethandiyldiimino)bis[ethanol], Putrescin, Morpholin, Diethylamin, Tris(2-aminoethyl)amin, (±)-2-Amino-1-propanol, 2-Aminoethylpiperazin, 1,3-Diamino-2-propanol, Hexahydro-2,4,6-trimethyl-1,3,5-triazin, Propylendiamin und Mischungen davon.

5. Verfahren nach einem der vorhergehenden Ansprüche, bei dem das mindestens eine Tensid ein oder mehrere nicht-ionische Tenside umfasst.

6. Verfahren nach einem der vorhergehenden Ansprüche, bei dem das mindestens eine Tensid des Weiteren ein oder mehrere Olefinpolymere umfasst, die mit mindestens einer polaren funktionellen Gruppe funktionalisiert sind.

7. Verfahren nach einem der vorhergehenden Ansprüche, bei dem das Poly(olefin) ein Molekulargewicht von 200 bis 50000 g/mol, von 300 bis 40000 g/mol, von 400 bis 30000 g/mol, von 500 bis 20000 g/mol, von 600 bis 10000 g/mol, von 700 bis 5000 g/mol, von 800 bis 2500 g/mol oder von 950 bis 1200 g/mol aufweist.

8. Verfahren nach einem der vorhergehenden Ansprüche, bei dem das organische Amin primäre Aminfunktionalität umfasst.

9. Verfahren nach einem der vorhergehenden Ansprüche, bei dem das organische Amin ausgewählt ist aus N-Methyldiethanolamin, Monoethanolamin, 2-Amino-2-methyl-1-propanol, Diethanolamin, 1-Piperazinethanol, Triethanolamin, Diethylethanolamin, Diisopropanolamin, Diglykolamin, 2-(Methylamino)ethanol, 2-(Dimethylamino)ethanol, 1-Piperazinethanamin, 2-(Ethylamino)ethanol, (2-Hydroxyethyl)ethylendiamin, 1,4- Piperazindiethanol, Diethylentriamin, 3-Amino-1-propanol, Triethylentetramin, (±)-1-Amino-2-propanol, Tetraethylenpentamin, 2,2',-(1,2-Ethandiyldiimino)bis[ethanol], Tris(2-aminoethyl)amin, (±)-2-Amino-1-propanol, 2-Aminoethylpiperazin oder Mischungen davon; wobei das organische Amin vorzugsweise ausgewählt ist aus N-Methyldiethanolamin, Monoethanolamin, Diethanolamin, 1-Piperazinethanol, Diethylethanolamin, 1-Piperazinethanamin, Tetraethylenpentamin oder Mischungen davon.

10. Verfahren nach einem der vorhergehenden Ansprüche, bei dem die Poly(olefin)bernsteinsäure oder das Poly(olefin)bernsteinsäureanhydrid ausgewählt ist aus Poly(isopren)bernsteinsäure, Poly(isopren)bernsteinsäureanhydrid, Poly(isobutylen)bernsteinsäure, Poly-(isobutylen)bernsteinsäureanhydrid oder einer Mischung oder Kombination davon, wobei vorzugsweise die Poly(olefin)bernsteinsäure oder das Poly(olefin)bernsteinsäureanhydrid Poly(isobutylen)bernsteinsäure oder Poly(isobutylen)bernsteinsäureanhydrid ist.

11. Verfahren nach einem der vorhergehenden Ansprüche, bei dem das Tensid das Reaktionsprodukt oder die Mischung umfasst von: 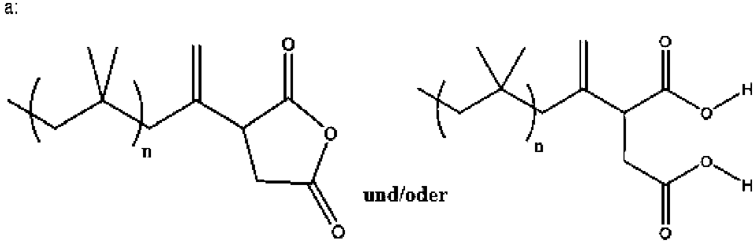
mit b: einem oder mehreren organischen Aminen ausgewählt aus N-Methyldiethanolamin, Monoethanolamin, Diethanolamin, 1-Piperazinethanol, Diethylethanolamin, 1-Piperazinethanamin, Tetraethylenpentamin;
wobei n eine positive ganze Zahl von 5 bis 200, vorzugsweise von 10 bis 100, bevorzugter von 12 bis 90, noch bevorzugter von 14 bis 45, noch bevorzugter von 16 bis 22 und weiter bevorzugt von 17 bis 21 ist.

12. Verfahren nach einem der vorhergehenden Ansprüche, bei dem das Basisöl ein oder mehrere Basismaterialien der Gruppe I, Basismaterialien der Gruppe II, Basismaterialien der Gruppe III, Basismaterialien der Gruppe IV, vorzugsweise der Gruppe IV, umfasst oder daraus besteht.

13. Verfahren nach einem der vorhergehenden Ansprüche, bei dem das von der gasförmigen Mischung abgetrennte saure Gas Kohlendioxid umfasst oder ist.

14. Verfahren nach einem der vorhergehenden Ansprüche, bei dem die mindestens eine organische Base eine innere Phase in dem Basisöl bildet, wobei das Tensid vorzugsweise eine Grenzschicht zwischen der organischen Base und dem Basisöl bildet.

15. Verfahren nach einem der vorhergehenden Ansprüche, bei dem die organische Base in einer Menge von 20 Gew.% bis 46 Gew.%, vorzugsweise 30 Gew.% bis 45 Gew.% und noch bevorzugter 40 Gew.% bis 45 Gew.% der Dispersion vorhanden ist.

16. Verfahren nach einem der vorhergehenden Ansprüche, bei dem das Basisöl in einer Menge von 10 Gew.% bis 90 Gew.% der Dispersion, vorzugsweise von 20 Gew.% bis 80 Gew.%, bevorzugter von 30 Gew.% bis 70 Gew.%, noch bevorzugter von 40 Gew.% bis 60 Gew.% und noch bevorzugter von 45 Gew.% bis 55 Gew.% vorhanden ist, in jedem Fall bezogen auf das Gewicht der Dispersion.

17. Verfahren nach einem der vorhergehenden Ansprüche, bei dem das Tensid in einer Menge von 0,1 Gew.% bis 10 Gew.%, vorzugsweise von 1 Gew.% bis 9 Gew.%, bevorzugter von 2 Gew.% bis 8 Gew.%, noch bevorzugter von 3 Gew.% bis 7 Gew.% und noch bevorzugter von 4 Gew.% bis 6 Gew.% und weiterhin bevorzugt von 4,5 Gew.% bis 5,5 Gew.% der Dispersion vorhanden ist.

18. Verfahren nach einem der vorhergehenden Ansprüche, das des Weiteren einen oder mehrere der Schritte:
a. Entfernen der gasförmigen Mischung aus Kontakt mit der Dispersion oder Einbringung zu der Dispersion,
b. Transferieren der Dispersion zu einem Desorber, und/oder
c. Erwärmen der Dispersion vorzugsweise auf eine Temperatur von 20°C bis 100°C über der Dispersionstemperatur, wenn die gasförmige Mischung die Dispersion kontaktiert, bevorzugter auf eine Temperatur von 25°C bis 80°C darüber, noch bevorzugter auf eine Temperatur von 30°C bis 70°C darüber, noch bevorzugter 35°C bis 60°C darüber und noch bevorzugter etwa 40°C bis etwa 50°C darüber, um das abgetrennte saure Gas freizusetzen;
nach Kontaktieren der gasförmigen Mischung mit der Dispersion umfasst.

19. Zusammensetzung zum Abtrennen saurer Gase von einer gasförmigen Mischung, die solche sauren Gase umfasst, wobei die Zusammensetzung eine Dispersion von mindestens einer labilen organischen Base in einem Basisöl umfasst, wobei die Dispersion des Weiteren mindestens ein Tensid umfasst, wobei das mindestens eine Tensid das Reaktionsprodukt oder eine Mischung von Poly(olefin)bernsteinsäure und/oder Poly(olefin)bernsteinsäureanhydrid mit einem organischen Amin oder Alkanolamin umfasst,
wobei die organische Base in einer Menge von mindestens 20 Gew.% der Dispersion vorhanden ist, wobei die Dispersion vorzugsweise weiterhin gemäß einem der Ansprüche 2 bis 17 definiert ist.

20. System zum Abtrennen saurer Gase von einer gasförmigen Mischung, die solche sauren Gase umfasst, welches ein Gefäß mit Mitteln zur Fluideinbringung und -entfernung umfasst, wobei das Gefäß eine Zusammensetzung gemäß Anspruch 19 enthält.

21. Verwendung einer Zusammensetzung, die eine Dispersion von mindestens einer organischen Base und einem Basisöl umfasst, bei der die Zusammensetzung des Weiteren mindestens ein Tensid umfasst, wobei das mindestens eine Tensid das Reaktionsprodukt oder eine Mischung von Poly(olefin)bernsteinsäure und/oder Poly(olefin)bernsteinsäureanhydrid mit einem organischen Amin oder Alkanolamin umfasst, und
wobei die organische Base in einer Menge von mindestens 20 Gew.% der Dispersion vorhanden ist, um saure Gase von einer gasförmigen Mischung abzutrennen, die solche sauren Gase enthält.

22. Verwendung nach Anspruch 21, bei der das saure Gas Kohlendioxid ist.

23. Verwendung nach einem der Ansprüche 21 oder 22, bei der die Dispersion gemäß einem der Ansprüche 2 bis 17 definiert ist.

## Revendications

1. Procédé de séparation de gaz acides d'un mélange gazeux contenant de tels gaz acides, le procédé comportant la mise en contact du mélange gazeux avec une dispersion d'au moins une base organique et une huile de base, la dispersion comportant en outre au moins un tensioactif, dans lequel l'au moins un tensioactif comporte le produit de réaction ou le mélange d'un acide succinique poly(oléfine) et/ou d'un anhydride succinique poly(oléfine) avec une amine organique ou une alcanolamine, et
dans lequel la base organique est présente en une teneur d'au moins 20 % en poids de la dispersion.

2. Procédé selon la revendication 1, dans lequel l'au moins une base organique contient une fonctionnalité amine, de préférence choisie parmi une fonctionnalité amine primaire, une fonctionnalité amine secondaire, une fonctionnalité amine tertiaire, ou des combinaisons de celles-ci et plus préférentiellement choisie parmi une fonctionnalité amine primaire, une fonctionnalité amine secondaire ou une fonctionnalité amine à la fois primaire et secondaire.

3. Procédé selon la revendication 2, dans lequel l'au moins une base organique comporte en outre un groupe hydroxy.

4. Procédé selon une quelconque revendication précédente, dans lequel au moins une base organique est choisie parmi pipérazine, N-méthyldiéthanolamine, monoéthanolamine, 2-amino-2-méthyl-1-propanol, diéthanolamine, 1-pipérazineéthanol, diisopropanolamine, 2-(méthylamino)éthanol, 2-(diméthylamino)éthanol, 1-pipérazineéthanamine, 2-(éthylamino)éthanol, (2-hydroxyéthyl)éthylènediamine, 1-méthylpipérazine, 2-méthylpipérazine, 1,4-pipérazinediéthanol, diéthylènetriamine, 3-amino-1-propanol, pipéridine, éthylènediamine, triéthylènetétramine, N-méthyl-1,3-propanediamine, 2,2-diméthyl-1,3-propanediamine, (±)-1-amino-2-propanol, triéthylamine, tétraéthylènepentamine, dabco, 1-éthylpipérazine, 2,2'-(1,2-éthanediyldiimino)bis[éthanol], putrescine, morpholine, diéthylamine, tris(2-aminoéthyl)amine, (±)-2-amino-1-propanol, 2-aminoéthylpipérazine, 1,3-diamino-2-propanol, hexahydro-2,4,6-triméthyl-1,3,5-triazine, propylènediamine, et leurs mélanges.

5. Procédé selon une quelconque revendication précédente, dans lequel l'au moins un tensioactif comporte un ou plusieurs tensioactifs non ioniques.

6. Procédé selon une quelconque revendication précédente, dans lequel l'au moins un tensioactif comporte en outre un ou plusieurs polymères d'oléfine, fonctionnalisés avec au moins un groupe fonctionnel polaire.

7. Procédé selon l'une quelconque des revendications précédentes, dans lequel la poly(oléfine) présente une masse moléculaire de 200 à 50 000 g/mol, de 300 à 40 000 g/mol, de 400 à 30 000 g/mol, de 500 à 20 000 g/mol, de 600 à 10 000 g/mol, de 700 à 5000 g/mol, de 800 à 2500 g/mol ou de 950 à 1200 g/mol.

8. Procédé selon une quelconque revendication précédente, dans lequel l'amine organique comporte une fonctionnalité amine primaire.

9. Procédé selon une quelconque revendication précédente, dans lequel l'amine organique est choisie parmi N-méthyldiéthanolamine, monoéthanolamine, 2-amino-2-méthyl-1-propanol, diéthanolamine, 1-Piperazineéthanol, triéthanolamine, diéthyléthanolamine, diisopropanolamine, diglycolamine, 2-(méthylamino)éthanol, 2-(diméthylamino)éthanol, 1-pipérazineéthanamine, 2-(éthylamino)éthanol, (2-hydroxyéthyl)éthylènediamine, 1,4-pipérazinediéthanol, diéthylènetriamine, 3-amino-1-propanol, triéthylènetétramine, (±)-1-amino-2-propanol, tétraéthylènepentamine, 2,2',-(1,2-éthanediyldiimino)bis[éthanol], tris(2-aminoéthyl)amine, (±)-2-amino-1-propanol, 2-aminoéthylpipérazine, ou leurs mélanges ; de préférence dans lequel l'amine organique est choisie parmi N-méthyldiéthanolamine, monoéthanolamine, diéthanolamine, 1-pipérazineéthanol, diéthyléthanolamine, 1-pipérazineéthanamine, tétraéthylènepéntamine ou leurs mélanges.

10. Procédé selon une quelconque revendication précédente, dans lequel l'acide succinique ou l'anhydride succinique poly(oléfine) est choisi parmi acide succinique poly(isoprène), anhydride succinique poly(isoprène), acide succinique poly(isobutylène), anhydride succinique poly(isobutylène) ou un mélange ou une combinaison de ceux-ci, de préférence dans lequel l'acide succinique ou l'anhydride succinique poly(oléfine) est de l'acide succinique poly(isobutylène) ou de l'anhydride succinique poly(isobutylène).

11. Procédé selon une quelconque revendication précédente, dans lequel le tensioactif comporte le produit de réaction ou le mélange de :
a : 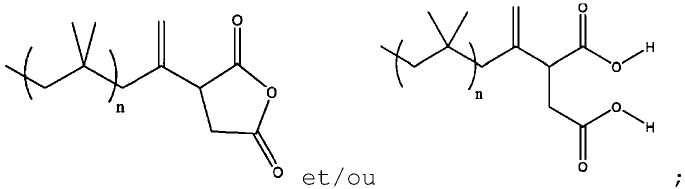
avec b : une ou plusieurs amines organiques choisies parmi N-méthyldiéthanolamine, monoéthanolamine, diéthanolamine, 1-pipériazineéthanol, diéthyléthanolamine, 1-pipériazineéthanamine, tétraéthylènepéntamine ;
dans lequel n est un entier positif de 5 à 200, de préférence de 10 à 100, plus préférentiellement de 12 à 90, encore plus préférentiellement de 14 à 45, encore plus préférentiellement de 16 à 22, et encore plus préférentiellement de 17 à 21.

12. Procédé selon une quelconque revendication précédente, dans lequel l'huile de base comporte ou se compose d'un ou plusieurs stocks de base du Groupe I, stocks de base du Groupe II, stocks de base du Groupe III, stocks de base du Groupe IV, de préférence du Groupe IV.

13. Procédé selon une quelconque revendication précédente, dans lequel le gaz acide séparé du mélange gazeux comporte, ou est, du dioxyde de carbone.

14. Procédé selon une quelconque revendication précédente, dans lequel l'au moins une base organique forme une phase interne dans l'huile de base, de préférence dans lequel le tensioactif forme une couche limite entre la base organique et l'huile de base.

15. Procédé selon une quelconque revendication précédente, dans lequel la base organique est présente en une teneur de 20 % à 46 %, de préférence de 30 % à 45 % et encore plus préférentiellement de 40 % à 45 % en poids de la dispersion.

16. Procédé selon une quelconque revendication précédente, dans lequel l'huile de base est présente en une teneur de 10 % à 90 % en poids de la dispersion, de préférence de 20 % à 80 %, plus préférentiellement de 30 % à 70 %, encore plus préférentiellement de 40 % à 60 % et encore plus préférentiellement de 45 % à 55 %, dans chaque cas en poids de la dispersion.

17. Procédé selon une quelconque revendication précédente, dans lequel le tensioactif est présent en une teneur de 0,1 % à 10 %, de préférence de 1 % à 9 %, plus préférentiellement de 2 % à 8 %, encore plus préférentiellement de 3 % à 7 %, encore plus préférentiellement de 4 % à 6 % et encore plus préférentiellement de 4,5 % à 5,5 %, en poids de la dispersion.

18. Procédé selon une quelconque revendication précédente, le procédé comportant en outre une ou plusieurs des étapes suivantes :
a. le retrait du mélange gazeux du contact avec ou de l'introduction dans la dispersion,
b. le transfert de la dispersion vers un désorbeur, et/ou
c. le chauffage de la dispersion, de préférence à une température de 20 °C à 100 °C supérieure à la température de dispersion lorsque le mélange gazeux est entré en contact avec la dispersion, plus préférentiellement à une température de 25 °C à 80 °C supérieure, encore plus préférentiellement à une température de 30 °C à 70 °C supérieure, encore plus préférentiellement de 35 °C à 60 °C supérieure, et encore plus préférentiellement d'environ 40 °C à environ 50 °C supérieure, pour libérer le gaz acide séparé ;
après contact du mélange gazeux avec la dispersion.

19. Composition pour séparer des gaz acides d'un mélange gazeux comportant de tels gaz acides, la composition comportant une dispersion d'au moins une base organique labile dans une huile de base, la dispersion comportant en outre au moins un tensioactif, dans laquelle l'au moins un tensioactif comporte le produit de réaction ou le mélange d'un acide succinique poly(oléfine) et/ou d'un anhydride succinique poly(oléfine) comportant une amine organique ou une alcanolamine,
dans lequel la base organique est présente en une teneur d'au moins 20 % en poids de la dispersion, de préférence dans lequel la dispersion est en outre définie selon l'une quelconque des revendications 2 à 17.

20. Système de séparation de gaz acides d'un mélange gazeux comportant de tels gaz acides, comportant un récipient avec des moyens d'introduction et de retrait de fluide, dans lequel le récipient contient une composition selon la revendication 19.

21. Utilisation d'une composition comportant une dispersion d'au moins une base organique et une huile de base, la composition comportant en outre au moins un tensioactif, dans laquelle l'au moins un tensioactif comporte le produit de réaction ou le mélange d'un acide succinique poly(oléfine) et/ou d'un anhydride succinique poly(oléfine) avec une amine organique ou une alcanolamine, et
dans laquelle la base organique est présente en une teneur d'au moins 20 % en poids de la dispersion pour séparer des gaz acides d'un mélange gazeux contenant de tels gaz acides.

22. Utilisation selon la revendication 21, dans laquelle le gaz acide est du dioxyde de carbone.

23. Utilisation selon l'une quelconque des revendications 21 et 22, dans laquelle la dispersion est définie selon l'une quelconque des revendications 2 à 17.
